# EUROPEAN PATENT APPLICATION

(11) **EP 3 961 192 A1**
(43) Date of publication of application: **02.03.2022**
(21) Application number: 20193907.1
(22) Date of filing: 01.09.2020
(51) Int. Cl.: G01N 21/64, G01N 21/25, B01L 3/00

(54) **DEVICE, METHOD AND USE FOR OPTICALLY DETERMINING AT LEAST ONE PROPERTY OF A SAMPLE POSITIONED ON A SAMPLE STAGE**

(71) Applicant: Evorion Biotechnologies GmbH, 48149 Münster (DE); Westfälische Wilhelms-Universität Münster, 48149 Münster (DE)
(72) Inventor: WEINGARTEN, Robert, 48161 Münster (DE); KLEINE-BRÜGGENEY, Hans, 48149 Münster (DE); BÜHREN, Sebastian, 48301 Nottuln (DE); HÜNECKE, Mathias, 48145 Münster (DE); HÜVE, Jana, 48149 Münster (DE); GOOSSEN-SCHMIDT, 12557 Berlin (DE); KLINGAUF, Jürgen, 48163 Münster (DE)
(74) Representative: Verhasselt, Jörn

(57) **Abstract**

Device for optically determining at least one property of a sample (2) positioned in or on a sample carrier (1) which can be moved relatively to the device, wherein the device is adapted to optically determine in a first step at least one property of a first sample (2) and at least one property of a second sample (2) without relative movement between the device and the sample carrier (1), wherein the sample carrier (1) is adapted to be moved so that in a second step a property of the second sample (2) can be optically determined, wherein the device is adapted to be tuned, depending on the information obtained with regard to the property of the second sample (2) determined in the first step, to optically determine the property of the second sample (2) in the second step.

## Description

The invention relates to a device and a method for optically determining at least one property of a sample positioned on a sample stage which can be moved relatively to the device, a method for optically determining at least one property of a sample positioned on a sample stage which can be moved relatively to the device. Further, the invention relates to a use of a device for optically determining at least one property of a sample positioned on a sample stage which can be moved relatively to the device.

It is known to optically determine properties of a sample. However, determining properties might be time consuming, especially in that correctly determining the property might require to find or locate the sample area of interest and/or to focus on the sample area of interest. Therefore, determining a property might be time consuming, difficult to handle and/or might involve high costs.

The object of the invention is to provide a device, a method and a use which is fast, easy to handle and/or of low cost. The object is achieved by a device according to claim 1, a method according to claim 13 and a use according to claim 15. Advantageous embodiments are disclosed in the dependent claims, the description and the figures.

The invention provides a device for optically determining at least one property of a sample positioned in or on a sample carrier which can be moved relatively to the device, wherein the device is adapted to optically determine in a first step at least one property of a first sample and at least one property of a second sample without relative movement between the device and the sample carrier, wherein the sample carrier is adapted to be moved so that in a second step a property of the second sample can be optically determined, wherein the device is adapted to be tuned, depending on the information with regard to the property of the second sample determined in the first step, to optically determine the property of the second sample in the second step.

The invention is based on the basic idea that in one step two samples can be determined with regard to a property of each of the two samples, wherein determining of a property of one of the samples is improved/tuned. Thus, in a first step a property of one of the samples can be determined and a property of the other of the two samples can be determined. In a directly subsequent or later second step, a further sample and one of the two samples considered before can be optically determined with regard to the property considered for the further sample and the one of the samples considered before. Optically determining the property of the sample previously determined in the first step is optimized with regard to the information obtained by the property determined or recorded in the first step. According to the invention it has been recognized that without movement of the stage in one step two samples can be optically analyzed independently of each other. One of the samples may be analyzed for the first time with regard to a property/information of interest in order to tune the observation/analysis in the second step. The other sample in the first step may be analyzed/optically determined in an improved/tuned manner using the information with regard to the property obtained in a previous step. Determining a property in one step for two samples independently to each other offers a lot of possibilities and combinations for analyzing the samples - which paradoxically can result in an improvement in the aspects of speed, accuracy and/or depth of detail despite the many possibilities that were previously considered to increase the complexity of the measurement and would result in a lower speed. In case the samples are arranged in a specific pattern, the arrangement of samples can be scanned and two samples can be optically determined in one step. One of the sample as a "preliminary analysis" and one of the samples for closer/detailed analysis using the result/information of the "preliminary analysis" from a previous step. Thus, in a first step information with regard to a property may be obtained to tune the property, for example the lens system or illumination or detection path for the second step for the respetive sample. The speed for optically determining the properties of the samples can be increased and/or optimized. A simple device may be possible and/or an inexpensive construction of the device may be possible. Further, a simple handling may be obtained.

The term "optically determined" in accordance with the description means that the samples can be positioned and measured by an optical microscope and a respective property can be optically determined. Therefore, the device may form at least part of an optical microscope or may be incorporated in an optical microscope, especially with regard to the means forming, reflecting, collecting and/or establishing the light path, especially the objective(s) and/or the ocular(s). The term "optical microscope" in accordance with the description encompasses any optical microscope or light microscope that commonly uses visible light and a system of lenses to generate magnified images. The microscope or device may have a (sample) stage which is motorized to be moved. The device may be adapted to capture optical information with regard to the respective sample, especially an information about photons spatially resolved, especially in the form on an image of the sample, can be obtained.

The term "stage" in accordance with the description encompasses a platform adjacent an objective (lens) in the optical path which supports the sample being optically determined. The stage may be part of the device. With this regard the sample carrier can be moved together with the stage because the sample carrier may be mounted to the stage. Further, it is considered that the sample carrier can be relatively moved to the device because the sample carrier is relatively moved to the objective(s) and/or the oculars(s). Typically, in the center of the stage a hole is provided through which light passes to illuminate the sample. In or on the stage a sample carrier can be placed and/or mounted. The stage and/or objective(s) and/or an electrically tunable lens may be moved/adapted for focusing on the respective sample. In one embodiment, the stage may be moved up or down for focusing on the respective sample. Further, the stage may move in the direction of two horizontal axes including an angle of greater 0° between them for positioning at least one sample to determine details of the sample and/or to allow movement to determine a further sample which is located on the stage spaced apart from the sample actually determined.

The "optical microscope" in accordance with the description may further comprise an ocular lens or lens system. It may further comprise the possibility to relatively move the stage in a direction towards or away from the ocular (along or in the direction of the detection path) to focus on a desired area of the sample. It may further comprise a light or illumination source which substantially depends on the way or manner used to determine the property of the sample. The light or illumination source may be a halogen lamp, at least one LED and/or a laser.

The optical microscope may further comprise a diaphragm and/or a condenser. The condenser may be a lens designed to focus light from the illumination or light source onto the sample. The condenser may include the diaphragm and/or at least one filter. The diaphragm and/or the at least one filter may enhance the quality and intensity of the illumination. It may further comprise at least one mirror and/or at least one light divider.

The optical information or image of the sample can be obtained by using an objective lens which may also be a combination of lenses. A variety of objectives can be used each objective having a respective, especially different magnification. The variety of objectives can be mounted on a turret, allowing the variety of objectives to be rotated to select a specific objective, especially an objective providing a suitable magnification.

As in one step, without moving the stage at least two samples are considered, it may be possible that at least one or more, especially two, objectives, at least one or more, especially two, light sources and/or at least one or more, especially two, condensers are provided. Further, it may be possible that one or two eyepieces are provided, wherein the provision of one or two eyepieces is completely optional.

In an embodiment the device can be at least part of a digital microscope or be a digital microscope which can be equipped with at least a digital camera, at least one sensor, especially a CMOS or CCD device, and/or at least a detector which provides the possibility to determine the property in an automated way, which may be partly or fully automated. The camera, sensor or detector offers the possibility to observe and/or analyze the sample(s) by a computer with regard to the property. The camera, sensor or detector can be evaluated and for individual data points a value can be evaluated, for example in the form of photon counting. In a preferred embodiment the device can be partly or wholly computer-controlled. The term "computer" encompasses a controlling unit which can be part of the device. A controlling unit can be designed to execute an instruction sequence (program) and may be functionally connected to the components of the device or microscope described therein. By the connection of the controlling unit and the components of the device or the microscope described herein it may be possible to control the components of the device or microscope in such a way that the instruction sequence can at least partially automated, in particular fully automated, be executed. Using a controlling unit allows for a simple and easy analysis of the optical information obtained from the respective sample(s). Further, a digital microscope offers the possibility to use a small amount or low level of light, so that damage to samples, especially vulnerable biological samples, can be avoided. It is possible that the optical information at least partly offers the information of a spatially correlated photon count.

In addition to the "hardware" of the "optical microscope" (elements that create, shape, form, direct, refract, diffract, reflect and/or redirect light) in accordance with the description, the optical microscope may comprise at least one controlling unit which may be adapted to include a controlling for focusing, a controlling for light source control, a controlling for adjusting a condenser, a controlling for excitation light shaping, a controlling for spectral separation and/or a controlling of the digital camera or detector.

As described in the following the samples for which the property is optically determined can be lit in a variety of ways. It is possible that the two samples considered in one step can be lit in the same way or manner. It is also possible that the two samples considered in one step can be lit in a different way. Further, it is possible that the way to lit the samples in the two steps may be the same or different. Therefore, the term "optical microscope" in accordance with the description encompasses the possibility that the microscope allows more than one manner to lit the sample. This offers a number of possibilities with regard to the properties that can be determined.

It is possible that one sample can be lit with light coming through (bright field) or around an objective lens (dark field). Phase-contrast imaging can be used to increase image contrast by highlighting small details, especially of differing refractive index, and which applies to illuminate the sample according to the phase contrast illumination method.

In accordance with the description, the term "dark-field microscopy" describes a microscopy method which substantially excludes the unscattered beam from the image. As a result, the field around the sample (i.e., where there is no sample to scatter the beam) is generally dark. In dark-field microscopy, the light path comprises light which enters the microscope for illumination of the sample emitted by the illumination source; a specially sized disc, a patch stop, may block some of the light of light from the illumination source, leaving an outer ring of illumination, a wide phase annulus can also be reasonably substituted at low magnification; a condenser lens may focus the light towards the sample; the light enters the sample; the scattered light enters the objective lens, while the directly transmitted light is not collected due to a direct-illumination block (see figure); only the scattered light is used to produce the image, while the directly transmitted light is omitted.

In bright-field microscopy the light path is extremely simple, no additional components are required beyond the normal light-microscope setup.

In phase-contrast microscopy phase shifts may be converted in light passing through a transparent sample to brightness changes in the image. The basic principle may be used in order to make phase changes visible in phase-contrast microscopy, which is to separate the illuminating (background) light from the light refracted by the sample (which makes up the foreground details) and to manipulate these differently.

In fluorescence microscopy the sample can be illuminated through the objective lens with a narrow set of a single wavelength or several wavelengths of light. The illumination light, i.e. the light of the light source or illumination source, may be a single wavelength or several wavelengths. A illumination source may be a xenon arc lamp or a mercury-vapor lamp, especially with an excitation filter. Further lasers or a supercontinuum sources and/or and high-power LED(s) may be used.

The illumination light may be absorbed by fluorophores in the sample. The sample may emit light of longer wavelengths (i.e., of a different color than the absorbed light). The illumination light may be separated from the much weaker emitted fluorescence through the use of a spectral emission filter. Further, an excitation filter, a dichroic mirror (or dichroic beamsplitter), and an emission filter may be provided. The filters and the dichroic beamsplitter are chosen to match the spectral excitation and emission characteristics of the fluorophore used to label the specimen.

The fluorescent microcopy may be an epifluorescence microscopy, where excitation of the fluorophore and detection of the fluorescence may be done through the same light path (i.e. through the objective). Light of the excitation wavelength may illuminate the respective sample through the objective lens. The fluorescence emitted by the sample may be focused to a sensor or a detector by the same objective that is used for the illumination. A dichroic beamsplitter may act as a wavelength specific filter, transmitting fluoresced light through to the sensor or the detector, but reflecting any remaining excitation light back towards the illumination source.

The light emitted from the illumination source may interact with fluorophores in the sample which then emit light of a different wavelength. The emitted light is determined and the respective property can be obtained, especially an image of the sample can be determined. For example, fluorescently labelled biological samples can be determined with regard to the property, which can include to recognize specific parts or elements, especially a cell, within the sample that are labelled/connected with a fluorescent marker.

It may be possible that confocal microscopy is used to optically determine the property of the respective sample which uses a scanning laser to illuminate the respective sample for fluorescence.

It may be possible that light sheet fluorescence microscopy is used. In contrast to epifluorescence microscopy only a thin slice (usually a few hundred nanometers to a few micrometers) of the sample may be illuminated perpendicularly to the direction of observation. For illumination, a laser light-sheet may be used, i.e. a laser beam which is focused only in one direction (e.g. using a cylindrical lens). A further method may use a circular beam scanned in one direction to create the light sheet. As only the actually observed section is illuminated, this method reduces a possible damage in the sample, especially in case the sample is a biological sample. It is possible that information or an image obtained by light sheet fluorescence microscopy can be obtained at speeds 10 to 100 times faster than those offered by point-scanning methods, especially in regard to 3D imaging of thick samples.

The term "property" in accordance with the description comprises how the sample interacts with light and encompasses especially which method is used to illuminate the sample and detect the light considered. The property may refer to a spatial information about an image obtained by a camera, a sensor or a detector. The term "property" may be optical information obtained by a manner of microscopy, especially a manner of lighting the sample and or collecting the light for obtaining the optical information or spatial information of an image obtained by a camera, a sensor or a detector. Especially, for one sample in the first step, the determined property may be different from the property for the same sample determined in a second step, however, the property for one sample in the first step may be the same to the property obtained in the second step for the same sample. The property may depend substantially on the type or kind of microcopy considered and/or the angle between the illumination and the observation path and/or whether the light emitted by the sample is directed to a prism, especially a deflection means of the sample carrier, which is described later with regard to a sample carrier. Just by way of an example, the following properties indicated by the manner of microscopy may be considered.

In bright-field microscopy, the sample absorbs light and the missing photon lead to a contrast which results in a property which can be substantially the absorption of light.

In dark-field microscopy, DIC or petrographic microscopy, the property of the sample may be the scattering of light, which induces a contrast due to scattered photons which are collected in the illumination path. The scattered light may be directly observed or directed to a prism, which forms part of the detection path.

In phase contrast microscopy, the phase of light may shift when interacting with the sample. In case, the light interacting with the sample is interfered with light, which does not interact with the sample, this may lead to an enhanced contrast, which is improved over the contrast usually obtained by bright-field microscopy, especially with regard to samples which induce more phase than absorption.

In fluorescence microscopy, the property may be the ability to be excited with a wavelength 1 and as a result emit with wavelength 2. Therefore, the property with this regard may be the "fluorescence" ability, thus the physical phenomenon to be fluorescent. The distinct staining of the sample may allow to observe more detailed information. The scattered light may be directly observed or directed to a prism, which forms part of the detection path.

With regard to fluorescence microscopy, different types may be considered with regard to the illumination/excitation kind and/or the analyzing kind: Epi fluorescence may be considered to be the most simple kind, in which all fluorophores of the sample are excited at the same time. In confocal microscopy, the region of excitation of the sample may be reduced to a minimum to obtain a point-like scanning which may improve contrast and resolution. The light emitted the sample may be directly observed or directed to a prism, which forms part of the detection path. In light sheet microscopy, the region of excitation may be reduced to one plane, preferably perpendicular to the detection path, which may also increase contrast and resolution. The light emitted the sample may be directly observed or directed to a prism, which forms part of the detection path. In super resolution microscopy (STED, SSIM, RESLFT, PALM, FPALM, dSTORM), the ability of fluorescence is analyzed with regard to the response behavior, i.e. especially in an aspect the nonlinear response and the time behavior. Thus, the super resolution microscopy may analyze and provide the property given by the nonlinear response to excitation or given by a complex temporal behavior. In super resolution microscopy, contrast and resolution may be enhanced.

The property may refer or correspond to an information of the sample. As the property may result in an information of how the sample interacts with light, the information related to the property may be a spatial information (information in x-direction, y-direction, z-direction) as localization information in two directions substantially perpendicular to each other. an area, a shape, an intensity, a texture, granularity, density, rigidity, elasticity, sub-texture and/or co-localization.

As the samples can be determined twice, i.e. in a first step and a second step, it may be possible that in the first step, dark-field microscopy from the side, epi fluorescence microscopy, confocal microscopy or light sheet microscopy is used. These kinds of microscopy may be used to obtain the information of the sample with regard to z- and y-localization and/or size in z- and/or y-direction. Further, it may be possible that in the first step, bright-field microscopy, dark-field microscopy, phase contrast microscopy, epifluorescence microscopy, confocal microscopy or light sheet microscopy is used. These kinds of microscopy may be used to obtain the information of the sample with regard to x-and y-localization and/or size in x- and/or y-direction. In the second step, bright-field microscopy may be used to obtain information about x- and y-localization of the sample, area of the sample and/or shape of the sample. In the second step, dark-field microscopy, DIC, petrographic microscopy or phase contrast microscopy may be used to obtain x- and y-localization of the sample, area, shape, intensity, texture, granularity, density, rigidity and/or elasticity of the sample. In the second step, epi-fluorescence microscopy, confocal microscopy, light sheet microscopy or super resolution microscopy may be used to obtain information about the x- and y-localization, area of the sample, shape, intensity, texture, granularity, density, rigidity, elasticity, sub-texture and/or co-localization. In the second step, bright-field microscopy, dark-field microscopy or phase contrast microscopy may be used to obtain precise x- and y-localization, area, shape, intensity, texture, granularity, density, rigidity and/or elasticity of the sample. In the second step, epi-fluorescence microscopy, confocal microscopy, light sheet microscopy or super resolution microscopy may be used to obtain information about the x- and y-localization, area, shape, intensity, texture, granularity, density, rigidity, elasticity, subtexture and/or colocalization of the sample. If different focal planes are considered in the first and second step, it becomes possible to obtain x- and y-localization information, area shape intensity, texture, grabularity, density, rigidity, elasticity for the upper or lower half of the sample chamber in the first step and obtain x- and y-localization information, area, shape, intensity, texture, granularity, density, rigidity, elasticity for the upper or lower half of the sample chamber. Every combination of the kind or type of microscopy used in the first step and the second step is possible.

It becomes possible that due to the two steps, i) in the first step an information with regard to the property is obtained which may relate to the y- and z-localization of the sample and the y-and z-localization information is used to focus the sample in the second step. Further, as an additional or alternative possibility, it becomes possible that ii) the magnification used in the first and second step may be different and the property and the resulting interaction of the sample with light is the same or different in the two steps, preferably the property and the resulting interaction of the sample with light is the same in the two steps. According to possibility ii) a more precise localization becomes possible and the term "tuned" encompasses an enhanced localization. Further, as an additional or alternative possibility, it becomes possible that iii) the property and the resulting interaction of the light with the sample may be the same, however, the way the interacted light is analyzed/directed to the camera, detector or sensor may be different so that the light coming from the sample is filtered with optically different spectral ranges so that different wavelengths are observed in the two steps such that two kinds of information are obtained with the two steps. Further, as an additional or alternative possibility, it becomes possible that iv) the property and the resulting interaction of the light with the sample may be the same, however, the way the illumination light is directed to the sample differs in the way that the focal planes of the two steps differ such that two kinds of information are obtained with the two steps.

In accordance with the description a side view of the sample may be obtained by focusing in higher depth. Several possibilities may be used. A camera, detector or sensor may be moved in the direction of the sample. Further, as an alternative or an additional measure, an optical refractive element, can be arranged between objective and a tube lens, which leads to a shift of the focus to a higher depth. This can be a fixed concave lens or an adjustable electrically controllable lens. Furthermore, this can be obtained by any adaptive beam shaping element, for example a spatial light modulator (SLM), can be used for this purpose. As an alternative measure or an additional measure, a defocusing element can also be placed directly on the sample in the form of a refractive layer.

If a number of samples is arranged on the stage, especially placed in or on a carrier on the stage, it becomes possible to increase the image acquisition rate, for example by a factor of 5 to 100 when compared to common multi-well based technologies. It becomes possible to independently determine single cells of a sample in different channels, especially channels defined by the light path defined by the light coming from the sample and directed to the digital camera, sensor or detector. For example, in a sequential arrangement of the samples on the stage it becomes possible that the detection path for a first sample is different from a second sample in one step without movement of the stage. In case that in one step one sample is observed by fluorescence microscopy and the other one by dark-field microscopy, and both detection paths are independently from one another, two properties may be determined in one step, which is substantially at the same time. In the latter case, the lateral dark-field microscopy may allow to determine the Z-position of the cell as a property. This property or information can then be used in the next step with regard to fluorescence microscopy of the same sample so that only the area of interest, especially the area comprising the cell, is visually determined via a manner of microscopy. This may provide an additional speed advantage of about a factor of two to five as the speed advantage depends on the ratio of volume of the sample's chamber and the volume of the sample.

The term "the device is adapted to optically determine" in accordance with the description encompasses the possibility that the device comprises a controlling unit that provides the possibility to execute an instruction sequence (program) which can at least partially automated, in particular fully automated, be executed. The device can be incorporated or used together with a digital microscope.

The term "tuned" in accordance with the description comprises an adaption of the manner of microscopy in the second step. The determined information with regard to the property for the sample which may be a cell, obtained in the first step, especially x- and y-localization information, size in x- and y-direction, area, shape, intensity, texture, granularity, density, rigidity elasticity, subtexture, colocalization, z- and y-localization information and/or size in z-and y-direction, is used to obtain enhanced information about the sample.

The term "sample" in accordance with the description comprises samples referring to biology, biotechnology, (micro-)biology, pharmaceutic research, microelectronics, nanophysics and mineralogy. In a preferred embodiment a sample in accordance with the description encompasses a sample comprising at least one cell. Especially the sample/cell(s) is encapsulated in a hydrogel matrix, especially a spherical hydrogel matrix. The encapsulating of the sample/ at least one or at least two cells provides the possibility for long-term imaging, perfusion culture, stimulation and on-chip characterization.

The term "sample carrier" in accordance with the description comprises a device having cavities for receiving at least one fluid or fluids. For the purposes of the invention, a cavity can be, for example, a channel, a reservoir or a chamber. The carrier is preferably plate-shaped. The carrier is particularly preferably multi-layered. The carrier is, for example, a cell culture plate.

The sample carrier may be part of or incorporated or accommodated in a "container", wherein the term "container" encompasses a device having cavities for accommodating at least one fluid or fluids. The cavities are preferably channels. Such a channel preferably extends from an outside of the container to an inside or underside of the container. The opening of the channel on the outside is used in particular for connecting a line of a pneumatic device. The opening of the channel on the underside or on the inside is used for fluid exchange between the container and the carrier. This is also described in more detail below. The term "accommodated" means that the carrier may at least partially arranged in the container. The container thus may comprise a receiving space for at least partially accommodating the carrier. The carrier can, for example, be arranged completely in the receiving space. Alternatively, it is possible for the carrier to protrude from the receiving space. Especially, the sample carrier used may be of the type disclosed in DE 10 2019 003 444 or PCT/EP2020/063581. Further, the container which is disclosed in DE 10 2019 003 444 or PCT/EP2020/063581 may be used for the purpose of carrying out the invention, The disclosure of DE 10 2019 003 444 and PCT/EP2020/063581 is incorporated herein.

In a preferred embodiment, the device is adapted to optically determine a property of a third sample in the second step without relative movement between the device and the sample stage. It becomes possible that in each of the steps at least two samples are considered which may increase the speed for determining the properties of each of the samples.

In a preferred embodiment, the device comprises a) one single objective or b) at least two objectives. According to this embodiment, the single objective is adapted to be positioned to capture light coming from the first sample and the second sample in the first step and/or if in the second step a third sample is considered to capture light coming from the second sample and the third sample in the second step. According to this embodiment, the at least two objectives are adapted to be positioned to capture light coming from the first sample and the second sample in the first step and/or incase a third sample is considered in the second step to capture light coming from the second sample and the third sample in the second step. A simple and easy manner can be provided which can be of low cost.

In a preferred embodiment, in the first step a localization information is optically determined for the second sample, and the device is adapted to focus the second sample in the second step depending on the localization information obtained in the first step. It may become possible to tune up the measurement or determining of the property in the second step to accurately determine the area of interest in the second step which improves speed and/or accuracy of the measurement or determining of the property.

In a preferred embodiment, a) a single excitation beam path is or b) two separate excitation beam paths are provided for the first and the second sample (and possibly the second and the third sample in the second step). It becomes possible to adapt the illumination beam path with regard to the required manner or desired type of property considered and/or to use a low cost solution in which the two samples considered in one step can be illuminated with the same illumination light.

In a preferred embodiment, a) a single detection beam path is or b) two separate detection beam paths are provided for the first and the second sample (and possibly the second and third sample in the second step). It becomes possible to adapt the detection beam path with regard to the required manner or desired type of property considered and/or to use a low cost solution in which the two samples considered in one step can be detected with the same light emitted by the samples without separation.

In a preferred embodiment, the device is adapted to optically determine the property in the first step or the property in the second step by using one of the following methods: laser scanning microscopy, epifluorescence microscopy, light sheet microscopy, phase contrast microscopy, bright field microscopy, and/or dark field microscopy. It becomes possible to adapt the manner of microscopy or visual determining the property to the property of interest.

In a preferred embodiment, at least one detector is provided for the first and the second sample. It is possible that a single detector is used for the first and the second sample (and/or possible for the second and third sample) which can be at least virtually divided. Preferably, a controlling unit can determine and analyze the information obtained from the detector with regard to the first and second sample and/or the second and third sample.

In a preferred embodiment, the device comprises a sample carrier having a positioning means for each of a plurality of samples, wherein in the area of the positioning means a deflecting surface is provided for deflecting light, the deflecting surface comprising a surface adapted for total reflection of the light, preferably the deflecting surface comprises a polymer, preferably polydimethylsiloxane. The sample carrier independently constitutes an invention. According to this aspect, the invention provides a sample carrier which may form a combination with the device; however, the sample carrier substantiating patentability in itself. Whereas typically metallic coated surfaces are used as deflecting surfaces, the sample carrier provides a deflecting surface which is formed at least partly of an uncoated transparent material. Preferably this material is a polymer. The transition to air may cause a total reflection for angles of incidence above about 45°. The position and/or shape of the deflecting surface may be decisive in order to ensure a right-angled deflection. Further, due to the deflecting surface the possibility is offered that the light emitted by the sample is not directly observed but re-directed by the deflecting surface which may be part of the detection path and offers additional possibilities. The deflecting surface may be part of a prism.

In a preferred embodiment, the positioning means for each of the samples in the sample carrier are arranged in a line. An at least partly or fully automated determining of the properties becomes possible. Movement of the sample stage can be easily controlled. Determining the properties of the sample can be obtained fast and without involving high costs. The term "line" encompasses an arrangement of samples along a line that runs essentially along one direction, whereby the line may include curved sections. In a preferred embodiment, the line is a straight line. Besides the arrangement of samples along a straight line, it may be preferred to arrange the samples in an arrangement which is shaped like a matrix. The term "matrix-shaped" includes the arrangement of samples in two directions. The samples can be arranged in two directions, which are preferably perpendicular to each other. In each of the directions a linear arrangement (staright line) of the samples can be provided. In particular, an arrangement can be provided along rows and columns, whereby a right-angled arrangement of the rows and columns is preferred. Adjacent samples can be arranged equidistant to each other, especially in the rows. An arrangement can be chosen to simplify the optical detection, especially by choosing a simple travel path of the stage between the steps, i.e. the first and the second step.
The sample carrier can be adapted to the device in such a way that in one of the steps, preferably in both of the steps two samples can be optically determined which are arranged or positioned adjacent to each other in one line. After the first step, the stage can be moved such that the sample carrier is moved in such a manner that one of the samples that was optically determined in the first step is one of the samples which are optically determined in the second step.

In terms of images, in the two steps usually two adjacent samples can be optically determined. The stage can be moved by the distance between two adjacent sample chambers along the arrangement of the sample chambers, so that in a subsequent step one of the two samples of the first step and a new sample are optically determined. For example, the stage can be moved in such a way that always a "new" additional sample can be viewed in a subsequent/next step and one of the samples optically determined in a tuned manner in accordance with the analysis/information of a previous step.

It can be planned that in a first step of optically determining the samples of a line, it starts in such a way that only a first sample of the row is optically determined in the first step. In the second/subsequent step for the samples of this line, the stage can be moved in such a way that the first sample of the line is optically determined and, in addition, the second sample of the line undergoes a first optical determination. In the third step, the second sample is then optically determined for the second time and a third new sample is taken.

For the correct positioning of the samples, the sample carrier with the samples arranged therein according to a known pattern can be moved in such a way that the two outer sample chambers furthest apart are addressed and the pattern is made known to the device. The device can then by way of using a controlling unit move the stage to optically determine the samples in a pre-determined manner.

In a preferred embodiment, the positioning means and the deflection surface comprises substantially the same material. A simple and low cost manner of manufacturing a sample carrier which can be used in the described manner becomes possible.

In a preferred embodiment, the deflecting surface is adapted to deflect detection light coming from the sample. It becomes possible to couple light coming from the sample very easily into a detection path.

Further, the invention provides a method for optically determining at least one property of a sample positioned in or on a sample carrier which can be moved relatively to the device, the method comprising the following steps: in a first step optically determining at least one property of a first sample and optically determining at least one property of a second sample without relative movement between the device and the sample carrier, in a second step optically determining a property of the second sample, wherein between the first and the second step the device is tuned, depending on the information with regard to the property of the second sample determined in the first step, to optically determine the property of the second sample in the second step.

In a preferred embodiment, in the first and the second step data points of the second sample are recorded. As the property can result in an information of the sample with regard to the interaction with light, the information may be a spatial information about an image obtained by a camera, a sensor or a detector which refers to a two-dimensional arrangement of data points for each of which a value can be determined.

Further, the invention provides a use of a device for optically determining at least one property of a sample positioned in or on a sample carrier which can be moved relatively to the device, wherein the device is adapted to optically determine in a first step at least one property of a first sample and at least one property of a second sample without relative movement between the device and the sample carrier, wherein the sample carrier is adapted to be moved so that in a second step a property of the second sample can be optically determined, wherein the information obtained with regard to the property of the second sample optically determined in the first step is used to tune the device to optically determine the property of the second sample in the second step.

The invention is described with respect to several aspects referring to a device, a sample carrier, a method and a use. The explanations of the individual aspects complement each other, so that the explanations for the device are also to be understood as explanations of the description for the method and the use. With the description of the device, method steps in the sense of the method or procedural steps concerning the use are also revealed, which apply to the method and the use accordingly.

The invention is explained below with reference to figures. The figures only show exemplary embodiments of the invention. Shown are:
- Fig. 1: an isometric view of a section of a sample carrier;
- Fig. 2: a schematic drawing indicating a section of the sample carrier shown in Fig. 1 and an illumination path and a detection path for optically determining properties of samples;
- Fig. 3: a schematic drawing indicating optical analysis of samples arranged in a line in the sample carrier of Fig. 1;
- Fig. 4a: a schematic embodiment;
- Fig. 4b: an additional schematic embodiment;
- Fig. 5a: an additional schematic embodiment;
- Fig. 5b: an additional schematic embodiment;
- Fig. 5c: an additional schematic embodiment; and
- Fig. 5d: an additional schematic embodiment.

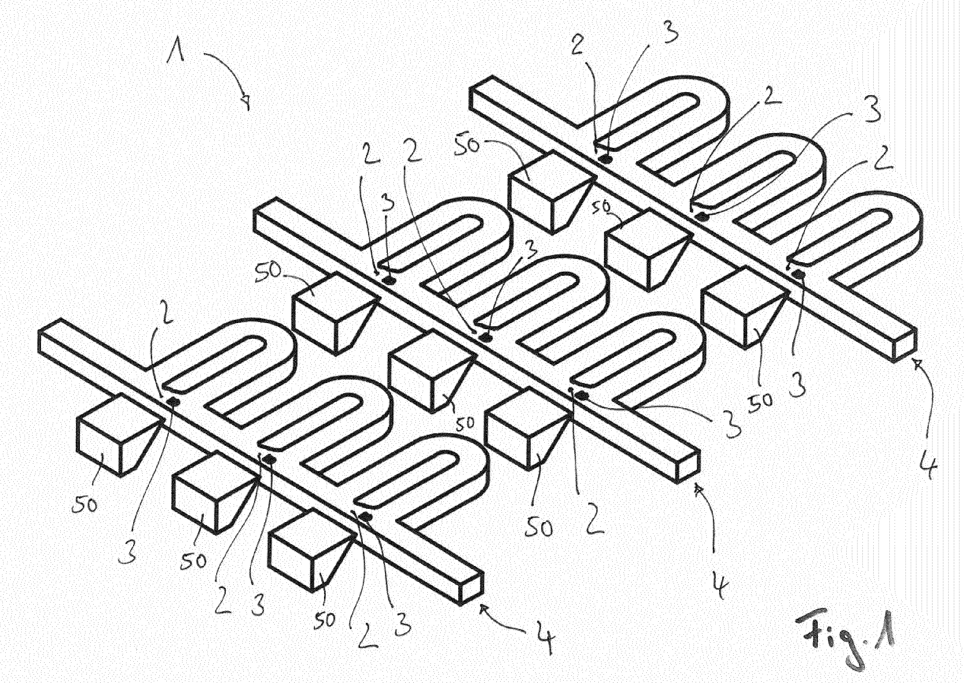

Fig. 1 shows an isometric view of a section of a sample carrier 1. Samples 2 are arranged in lines 3. Fig. 1 only shows a small section. It is to be understood that several hundreds of the samples 2 can be arranged in one line 4, especially 500 samples 2 can be arranged in one line 4. The samples 2 are positioned by positioning means 3 for each of the samples 2. The samples 2 of one line 4 are positioned along a straight line. Further, a matrix-like arrangement of the samples 2 is obtained in the sample carrier 1, in that several lines 3 are provided in the sample carrier 1 which are parallel to each other. The arrangement results in a positioning of samples 2 in rows and columns.

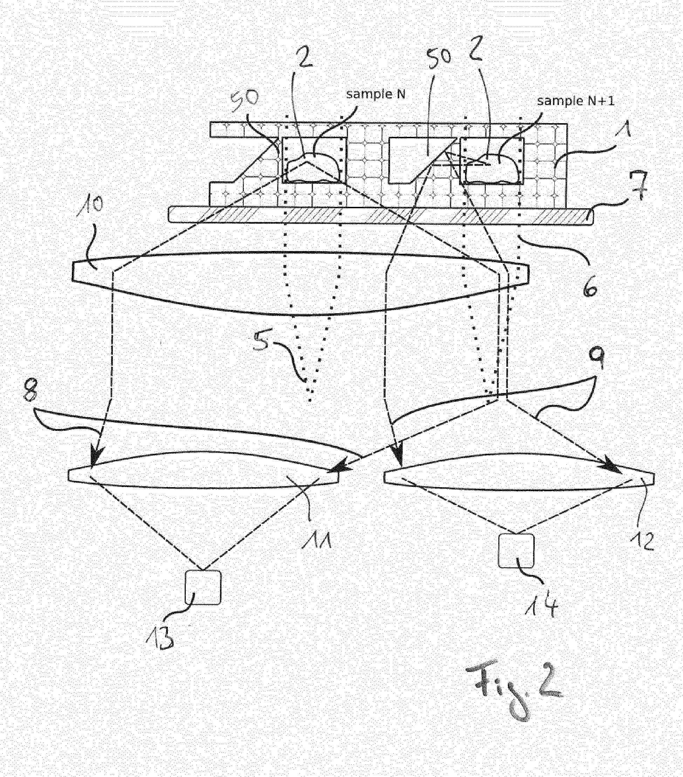

Fig. 2 shows in a schematic view a optical determination of two samples 2 in one step. The sample carrier 1 is positioned on a stage 7 of an optical microscope. The samples 2 are indicated by "sample N" and sample "N+1" which can be optically determined with regard to a property in one step without moving the stage 7.

An excitation path 5 for sample N is depicted as well an an excitation path 6 for sample N+1. Although, the two samples 2 be optically determined with regard to a property in a single step, the two excitations paths 5, 6 can be chosen to be different from each other. Further, a detection path 8 is depicted for sample N and a detection path 9 is depicted for sample N+1. For the two detection paths 8, 9 a single objective 10 is provided. The interaction of the samples 2 with the illumination light (property) is analyzed by a detector 13, 14, respectively. By way of an example an eyepiece or tubus lens 11, 12 is provided for each detector 13, 14 in the detection paths 8, 9. Thus, for each of the two samples 2 an appropriate illumination path/illumination method can be chosen as well as an appropriate detection path/detection method.

In the detection path 9 it is shown in Fig. 2 that a deflecting surface 50 re-directs light emitted from the sample 2 to the objective 12. The deflecting surface 50 forms part of the sample carrier 1. The deflecting surface is positioned in the area of the positioning means 3 and, therefore, in the area of the sample 2. For each sample 2 one deflecting surface 50 is provided. The deflecting surface 50 is adapted for total reflection of the light. The deflecting surface is formed at least partly of an uncoated transparent material, which in the embodiment shown a polymer which is also used for fabricating the sample carrier. Therefore, in the embodiment shown the deflecting surfaces 50 are formed together as one piece with the sample carrier 1.

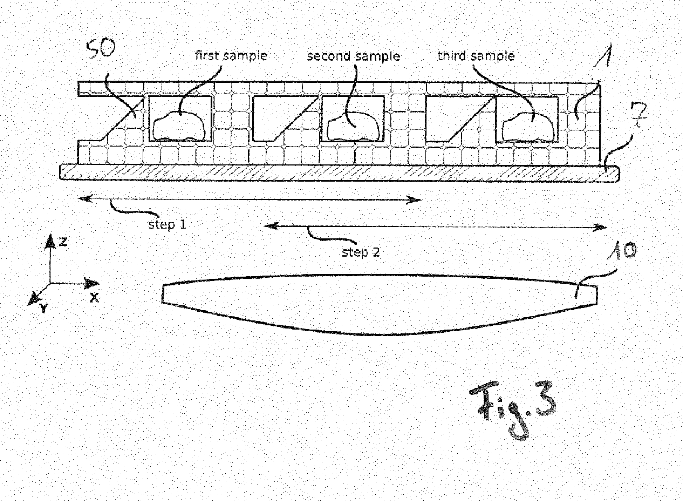

Fig. 3 shows in a schematic way the relative movement of the sample carrier 1 within two steps. In a first step, a first sample 2 and a second sample 2 are optically determined. In a second step, the second sample 2 and a third sample 2 are optically determined. The second sample can be optically determined in the second step using the information of the first step and the second sample 2 can be analyzed in more detail or with regard to additional information.

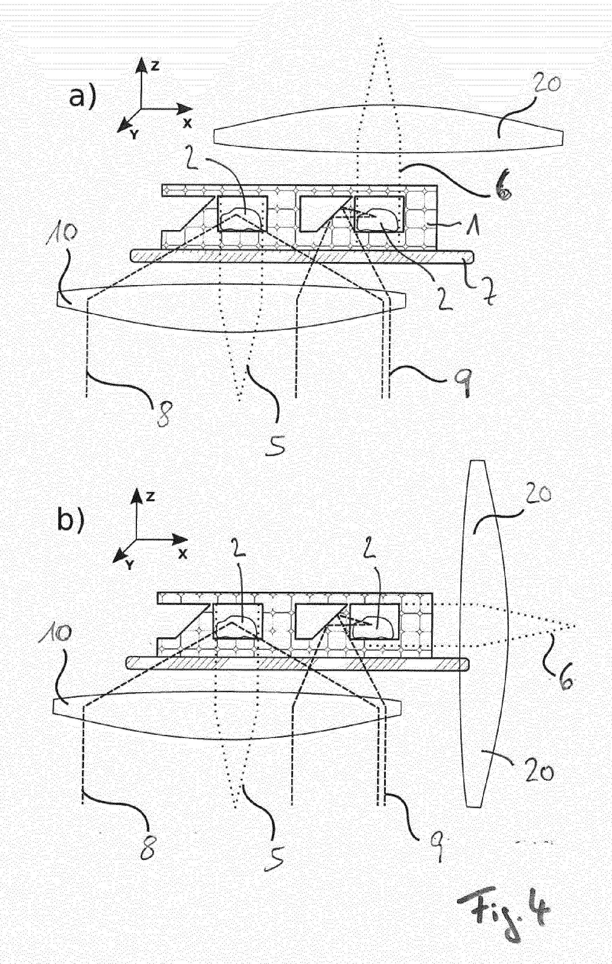

Fig. 4 shows two embodiments in which an objective 20 is provided for the excitation path 6 of the n+1 sample 2. With regard to the detection path 9 the objective 10 is used. Fig. 4a depicts an epifluorescent lighting from above for the second (N+1) sample 2 in one step and a combination of brightfield excitation/dark field detection. The embodiment indicated by the schematic drawing provides the advantage that the fluorescent marking is not necessary for a z-localization in dark-field modus. Fig. 4b shows the possibility that an excitation path 6 for the N+1 sample 2 is possible from the side.

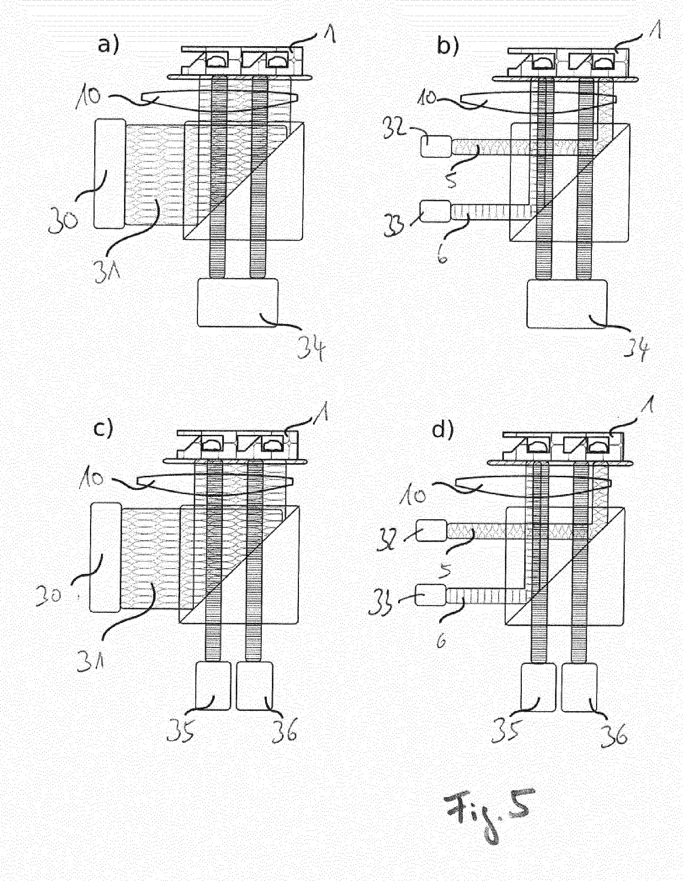

Fig. 5 shows several embodiments, wherein Fig. 5a shows a low-cost embodiment using a single light source 30 as an illumination/excitation source. Two excitation beams/paths 5, 6 indicated by reference sign 31 are provided. For example, an optical delay plate (lambda/2) is used to rotate the polarization of the beam just enough to split it into an ordinary and an extraordinary beam at a polarizing beam splitter. After the beam splitter, the different polarizations have no significant effect on the measurements/observation. Alternatively, there are different fixed and adaptive components available. Preferably, power distribution between the two excitation beams 5, 6 indicated by 31 can be adjusted at any time. Fig. 5b shows one light source 32, 33 for each of the excitation/illumination beams 5, 6. Whereas in Fig. 5a and 5b one detector 34 is provided. In Fig. 5c and 5d, two detectors 35, 36 are provided, one for each of the detection paths 8, 9.

## Claims

1. Device for optically determining at least one property of a sample (2) positioned in or on a sample carrier (1) which can be moved relatively to the device,
wherein the device is adapted to optically determine in a first step at least one property of a first sample (2) and at least one property of a second sample (2) without relative movement between the device and the sample carrier (1), wherein the sample carrier (1) is adapted to be moved so that in a second step a property of the second sample (2) can be optically determined, wherein the device is adapted to be tuned, depending on the information obtained with regard to the property of the second sample (2) determined in the first step, to optically determine the property of the second sample in the second step.

2. Device according to claim 1, wherein the device is adapted to optically determine a property of a third sample (2) in the second step without relative movement between the device and the sample carrier (1).

3. Device according to claim 1 or 2, wherein the device comprises
a) one single objective (10, 12) or
b) two objectives (10, 12),
which is/are adapted to be positioned to capture light coming from
i) the first sample (2) and the second sample (2) in the first step and/or
ii) in case the claim depends on claim 2, the second sample (2) and the third sample (2) in the second step.

4. Device according to one of claims 1 to 3, wherein in the first step a localization information is optically determined for the second sample (2), and the device is adapted to focus the second sample (2) in the second step depending on the localization information obtained in the first step.

5. Device according to one of claims 1 to 4, wherein
a) a single excitation beam path (5, 6) is or
b) two separate excitation beam paths (5, 6) are provided for the first and the second sample (2).

6. Device according to one of claims 1 to 5, wherein
a) a single detection beam path (8, 9) is or
b) two separate detection beam paths (8, 9) are provided for the first and the second sample (2).

7. Device according to one of claims 1 to 6, wherein the device is adapted to optically determine the property in the first step or the property in the second step by using one of the following methods: confocal microscopy, epi fluorescence microscopy, light sheet microscopy, phase contrast microscopy, bright field microscopy, dark field microscopy and/or super resolution microscopy.

8. Device according to one of claims 1 to 7, wherein at least one detector (13, 14, 33, 34, 35) is provided for the first and the second sample (2).

9. Device, preferably according to one of claims 1 to 8, wherein the device comprises a sample carrier (1) having a positioning means (3) for each of a plurality of samples (2), wherein in the area of the positioning means (3) a deflecting surface (50) is provided for deflecting light, the deflecting surface (50) comprising a surface adapted for total reflection of the light, preferably the deflecting surface (50) comprises a polymer, preferably polydimethylsiloxane.

10. Device according to claim 9, wherein the positioning means (3) for each of the samples (2) in the sample carrier (1) are arranged in a line (4).

11. Device according to claim 9 or 10, wherein the positioning means (3) and the deflection surface (50) comprises substantially the same material.

12. Device according to one of claims 9 to 11, wherein the deflecting surface (50) is adapted to deflect detection light.

13. Method for optically determining at least one property of a sample (2) positioned in or on a sample carrier (1) which can be moved relatively to the device, the method comprising the following steps: in a first step optically determining at least one property of a first sample (2) and optically determining at least one property of a second sample (2) without relative movement between the device and the sample carrier (1), in a second step optically determining a property of the second sample (2), wherein between the first and the second step the device is tuned, depending on the information with regard to the property of the second sample (2) determined in the first step, to optically determine the property of the second sample (2) in the second step.

14. Method according to claim 13, wherein in the first and the second step data points of the second sample (2) are recorded.

15. Use of a device for optically determining at least one property of a sample positioned in or on a sample carrier (1) which can be moved relatively to the device, wherein the device is adapted to optically determine in a first step at least one property of a first sample (2) and at least one property of a second sample (2) without relative movement between the device and the sample carrier (1), wherein the sample carrier (1) is adapted to be moved so that in a second step a property of the second sample (2) can be optically determined, wherein the information with regard to the property of the second sample (2) optically determined in the first step is used to tune the device to optically determine the property of the second sample (2) in the second step.
